# EUROPÄISCHE PATENTANMELDUNG

(11) **EP 1 972 818 A1**
(43) Veröffentlichungstag der Anmeldung: **24.09.2008**
(21) Anmeldenummer: 07005779.9
(22) Anmeldetag: 21.03.2007
(51) Int. Cl.: F16D 25/06

(54) **Schaltkupplung**

(71) Anmelder: Hoerbiger Antriebstechnik GmbH, 86956 Schongau (DE)
(72) Erfinder: Oswald, Johann, 82438 Eschenlohe (DE)
(74) Vertreter: Schmitz, Hans-Werner

(57) **Zusammenfassung**

Die Erfindung betrifft eine hydraulisch betätigte Schaltkupplung (1)
- mit einem Kupplungspaket (2),
- mit einem Betätigungskolben (3), der zwischen einer Betätigungsstellung zur Schließung des Kupplungspaketes (2) und einer Offenstellung bewegbar ist, und der einen hydraulisch wirksamen Bereich (4) aufweist;
- mit einer Hydraulikdruckkammer (5) auf einer Seite des Betätigungskolbens (3); und
- mit einer Ausgleichskammer (6) auf der gegenüberliegenden Seite des Betätigungskolbens (3), in der eine Federanordnung (7) zur Vorspannung des Betätigungskolbens (3) in die Offenstellung angeordnet ist,

wobei
- der hydraulisch wirksame Bereich (4) zwei sich in entgegengesetzte Richtungen (A, B) öffnende ringförmige Kammern (20, 21) aufweist.

## Beschreibung

Die Erfindung betrifft eine Schaltkupplung gemäß dem Oberbegriff des Anspruches 1.

Hydraulisch betätigte Kupplungen finden heute im Automotive - Bereich viele Anwendungen. Diese Maschinenelemente werden z.B. als Anfahrkupplungen, in Längs- und Quersperren, bei NKW für Nebenantriebe und andere Zwecke verwendet. In jüngerer Zeit fanden insbesondere sogenannte Doppelkupplungen vermehrt Verwendung, welche für Doppelkupplungsgetriebe benötigt werden. Vom Aufbau her sind sich hydraulisch betätigte Kupplungen im großen und ganzen immer ähnlich; ein Lamellenpaket bestehend aus Antriebs- und Abtriebslamellen wird von einem hydraulischen Kolben zusammengepresst, wodurch durch den entstehenden Kraftschluss ein Drehmoment übertragen wird. Die Rückstellung des Kolbens erfolgt über Spiral- oder Tellerfedern, wobei Spiralfedern deutlich zu bevorzugen sind, da diese im Gegensatz zu Tellerfedern keine Hysterese aufweisen und daher insbesondere für geregelte Kupplungen deutlich beherrschbarer sind.

Die Betätigungskolben sind dabei ein zentrales Element dieser Kupplungen. Je nach Drehzahlniveau der Kupplung werden zweiseitig mit Öl beaufschlagte Kolben verwendet, um eine Kompensation der auftretenden Fliehkräfte zu erreichen. EP1602846 zeigt z.B. ein gängiges Design für diese Bauteile, angeordnet in einer Doppelkupplung. Wegen der beengten Platzverhältnisse wird dort nur eine der beiden Kupplungen mit Spiralfedern zurückgestellt, während die andere über eine Tellerfeder zur Rückstellung verfügt. An den dargestellten Kolben sind die erforderlichen Dichtungen direkt an die Kolben anvulkanisiert. Diese Ausgestaltung ist nach dem Stand der Technik üblich, allerdings ist sie mit hohen Kosten verbunden, da die Kolben dafür relativ aufwendig vorbereitet werden müssen.

Es ist daher Aufgabe der vorliegenden Erfindung, eine hydraulisch betätigte Schaltkupplung gemäß dem Oberbegriff des Anspruches 1 zu schaffen, deren Aufbau bei bestmöglicher Ausnutzung des Bauraumes vereinfacht ist.

Die Lösung dieser Aufgabe erfolgt durch die Merkmale des Anspruchs 1.

Die erfindungsgemäße Ausgestaltung der Betätigungskolben der erfindungsgemäßen Schaltkupplung ermöglicht die Verwendung standardmäßiger Dichtungen, wie z.B. die Verwendung von Nutringen oder O-Ringen, und desweiteren wird eine bestmögliche Ausnutzung des Bauraumes durch das Vorsehen zweier sich vorzugsweise in diametral entgegengesetzter Richtungen öffnender ringförmiger Kammern erreicht, was es wiederum möglich macht, die Verwendung von Schraubenfedern für die Rückstellung des Betätigungskolbens in die Offenstellung zu erleichtern.

Ferner wird es möglich, als Halter für die Dichtungen Kunststoffteile zu verwenden, die gleichzeitig als Halter für die Federanordnungen dienen können.

Die Unteransprüche haben vorteilhafte Weiterbildungen der Erfindung zum Inhalt.

Weitere Einzelheiten, Vorteile und Merkmale der Erfindung ergeben sich aus nachfolgender Beschreibung von Ausführungsbeispielen anhand der Zeichnung. Es zeigt:
- Fig. 1: eine schematisch stark vereinfachte Prinzipdarstellung einer ersten Ausführungsform einer erfindungsgemäßen Schaltkupplung,
- Fig. 2: eine der Fig. 1 entsprechende Darstellung einer als Doppelkupplung ausgebildeten erfindungsgemäßen Schaltkupplung, und
- Fig. 3: eine geschnittene perspektivische Ansicht einer Ausführungsform eines erfindungsgemäßen Betätigungskolbens.

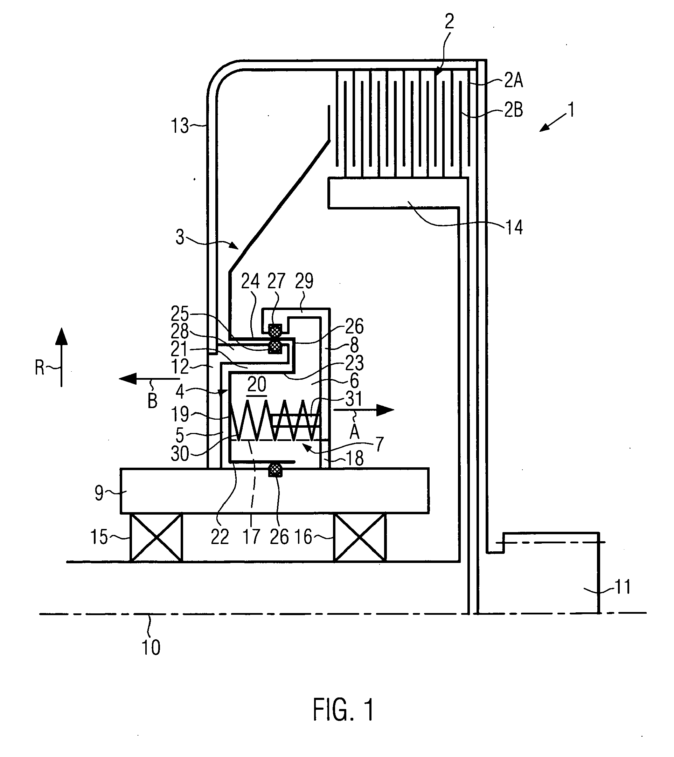

In Fig. 1 ist in schematisch stark vereinfachter Prinzipdarstellung eine erste Ausführungsform einer erfindungsgemäßen hydraulisch bestätigten Schaltkupplung 1 dargestellt, die als Einfach-Kupplung ausgebildet ist und von der nur der obere Teil oberhalb einer Abtriebs- und Antriebswelle 10 bzw. 11 dargestellt ist.

Die Schaltkupplung 1 weist ein üblich ausgebildetes Kupplungspaket 2 auf, das Außenlamellen 2A und Innenlamellen 2B umfasst, die geschachtelt ineinander angeordnet sind, wobei die Innenlamellen 2B auf einen Lamellenträger 14 vorgesehen sind. Diese Lamellen 2A und 2B können mittels eines Betätigungskolbens 3 betätigt werden. Dieser schiebt zum Schließen der Kupplung die Lamellen 2A und 2B des Lamellenpaketes 2 zusammen, so dass in dieser Schließstellung ein Drehmoment übertragen werden kann. In der Offenstellung des Betätigungskolbens 3, in die dieser durch eine Federanordnung 7, welche vorzugsweise aus Spiralfedern besteht, vorgespannt wird, sind die Kupplungslamellen 2A und 2B voneinander getrennt, so dass die Kupplung 1 in diesem Zustand gelöst ist.

Die erfindungsgemäße Schaltkupplung 1 weist zu der zuvor erläuterten Betätigungsweise eine Hydraulikdruckkammer 5 auf, die auf einer Seite des Betätigungskolbens 3, gemäß der in Fig. 1 gewählten Darstellung auf dessen linker Seite, angeordnet ist. In die Hydraulikdruckkammer 5 kann eine Hydraulikflüssigkeit zum Aufbau des Druckes eingeleitet werden, der dazu benötigt wird, den Betätigungskolben 3 zum Schließen des Kupplungspaketes 2 in der zuvor erläuterten Art und Weise axial zu verschieben.

Dementsprechend weist der Betätigungskolben 3 einen hydraulisch wirksamen Bereich auf, der durch das Bezugszeichen 4 in Fig. 1 gekennzeichnet ist und der der Hydraulikdruckkammer 5 zugewandt ist.

Ferner ist eine Ausgleichskammer 6 vorgesehen, die auf der gegenüberliegenden Seite des Betätigungskolbens 3, im Beispielsfalle also der rechten Seite des Betätigungskolbens 3, angeordnet ist, und in der die zuvor erläuterte Federanordnung 7 zur Vorspannung des Betätigungskolbens 3 in die Offenstellung vorgesehen ist. Die Ausgleichskammer 6 kann ebenfalls mit Hydraulikflüssigkeit gefüllt werden, um zu verhindern, dass der Betätigungskolben 3 allein durch Fliehkräfte, die auf das Hydrauliköl in der Hydraulikkammer 5 ansonsten alleine wirken würden, betätigt wird.

Wie Fig. 1 verdeutlicht, weist der hydraulisch wirksame Bereich 4 zwei ringförmige bzw. wannenförmige Kammern 20 und 21 auf, die sich in einander entgegengesetzter Richtungen öffnen, die in Fig. 1 durch die Pfeile A und B symbolisiert sind.

Die ringförmige Kammer 20 ist im Beispielsfalle von einer einer Kupplungsnabe 9 benachbarten Wand 22, einer sich daran anschließenden Verbindungswand 19 und einer in Radialrichtung R der Schaltkupplung 1 weiter außenliegenden Wand 23 gebildet. Wie die Fig. 1 verdeutlicht, sind die Wände 22 und 23 im Beispielsfalle zumindest im Wesentlichen parallel zueinander ausgerichtet. Dementsprechend ist bei der dargestellten Ausführungsform die Verbindungswand 19 im rechten Winkel zu den Wänden 22 und 23 angeordnet. Hinsichtlich der Wand 23 ist die Ausrichtung im rechten Winkel zur Radialrichtung R jedoch nicht zwingend erforderlich. Vielmehr kann diese Wand 23 auch schräg gestellt sein.

Die zweite Kammer 21, die sich in Richtung B öffnet, wird von der Wand 23, einer Verbindungswand 26 und einer radial am weitesten außen liegenden Wand 24 begrenzt. Die Wände 24 und 22 sind stets, zumindest im Wesentlichen, parallel zueinander ausgerichtet.

Dementsprechend öffnet sich die ringförmige Kammer 20 des hydraulisch wirksamen Bereiches zur Ausgleichskammer 6 hin, wie sich dies im Einzelnen aus der Fig. 1 ergibt. Die Kammer 21 öffnet sich in Richtung auf die Hydraulikdruckkammer 5, die im Beispielsfalle von den Wänden 22, 19, 23, 26 und einem Teil der Wand 24 und ferner von einem Wandabschnitt 28 einer Begrenzungswand 12 begrenzt wird. Zur Abdichtung der Hydraulikdruckkammer 5 ist eine Dichtanordnung 26 vorgesehen, die in einer Nut der Kupplungsnabe 9 angeordnet ist und mit der Wand 22 zusammenwirkt. Ferner ist im oberen Teil eine weitere Dichtungsanordnung 25 vorgesehen, die in einer Nut des Wandabschnittes 28 vorgesehen ist und die mit der radial am weitesten außen liegenden Wand 24 zusammenwirkt.

Die ringförmige Kammer 20 und die Ausgleichskammer 6 sind von den Wänden 22, 19, 23, 26 sowie einem Dichtwandabschnitt 29 einer Trennwand 8 umgrenzt, wie sich dies im Einzelnen aus der Darstellung der Fig. 1 ergibt. Im Dichtwandabschnitt 29 ist in einer Nut eine weitere Dichtungsanordnung 27 vorgesehen, die mit der Wand 24 zusammenwirkt.

Wie Fig. 1 ferner verdeutlicht, weist die Federanordnung 7 zumindest eine, in der Regel jedoch eine Mehrzahl von Schraubenfedern 30 auf, die auf eine stabförmige Federführung 31 der Trennwand 8 gesteckt sind und sich an einem Ende an der Trennwand 8 und am anderen Ende an der Verbindungswand 19 des hydraulisch wirksamen Bereichs 4 des Betätigungskolbens 3 abstützt bzw. abstützen. Diese Anordnung ergibt sich ebenfalls im Einzelnen aus der zeichnerischen Darstellung der Fig. 1.

Fig. 1 verdeutlicht ferner das Vorsehen eines Schlitzes 18 in der Trennwand 8 und die Einzeichnung eines Ölniveaus 17, welches es ermöglicht, die Druckkompensation auf einem höheren radialen Niveau als demjenigen der Hydraulikdruckkammer 5 auszuführen, um eine Überkompensation weitgehend oder vollständig zu verhindern.

Zur Vervollständigung der Beschreibung ist noch auf Lageranordnungen 15 und 16 zu verweisen, mit deren Hilfe die Kupplungsnabe 9 auf der Abtriebswelle 10 oder einem nicht dargestellten extern befestigten Support gelagert ist. Schließlich ist in Fig. 1 mit der Bezugsziffer 13 das Kupplungsgehäuse symbolisiert.

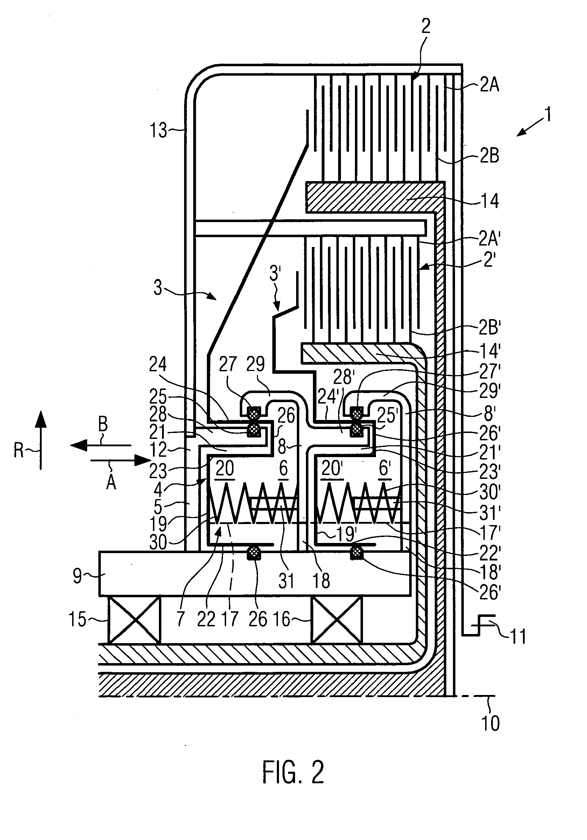

In Fig. 2 ist eine zweite Ausführungsform einer erfindungsgemäßen hydraulisch betätigten Schaltkupplung 1 dargestellt, bei der es sich im Beispielsfalle jedoch um eine Doppelkupplung handelt, die zwei radial ineinander geschachtelte Kupplungspakete 2, 2' aufweist. Ferner sind zwei axial nebeneinander angeordnete Betätigungskolben 3 und 3' vorgesehen, die im Beispielsfalle hinsichtlich ihres jeweiligen hydraulisch wirksamen Bereiches 4 bzw. 4' einen identischen Aufbau haben.

Dementsprechend sind in Fig. 2 alle diejenigen Teile, die denjenigen der Fig. 1 entsprechen, mit den gleichen Bezugsziffern versehen. Auf der in Fig. 2 rechten Seite der Schaltkupplung 1 ist der zweite Betätigungskolben 3' vorgesehen, der dem zweiten Kupplungspaket 2' zugeordnet ist. Diejenigen Teile, die denen des Betätigungskolbens 3 bzw. den sonstigen Teilen der Schaltkupplung 1 gemäß Fig. 1 entsprechen, sind auf der rechten Seite der Fig. 2 mit den gleichen Bezugsziffern, jedoch mit einem Strich indexiert angegeben, so dass hinsichtlich Aufbau und Funktion auf die Beschreibung der Fig. 1 Bezug genommen werden kann.

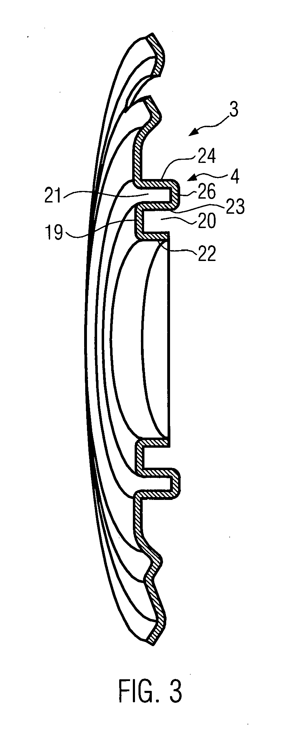

In Fig. 3 ist in einer perspektivischen Teilschnittansicht einer der beiden Betätigungskolben 3 nochmals zur Verdeutlichung seines Aufbaues dargestellt. Insbesondere ergibt sich aus der Fig. 3 der Aufbau und die Lage der ringförmigen Kammern 20 und 21 mit ihren Begrenzungswänden und den Öffnungsrichtungen, die bereits anhand der Fig. 1 im Einzelnen erläutert wurden.

Wie eingangs beschrieben wurde, ist es bei der in Fig. 2 dargestellten Doppelkupplung möglich, dass zumindest einer der Betätigungskolben 3 oder 3' in der zuvor erläuterten Art und Weise aufgebaut ist. Vorzugsweise sind jedoch beide Betätigungskolben 3 und 3' identisch in der Art und Weise aufgebaut, wie sie sich insbesondere aus der Beschreibung der Fig. 1 und 3 ergibt.

Zur Ergänzung der voranstehenden schriftlichen Offenbarung der Erfindung wird hiermit explizit auf die zeichnerische Darstellung der Erfindung in den Fig. 1 bis 3 verwiesen.

### Bezugszeichenliste

- 1: Hydraulisch betätigte Schaltkupplung (als Einfach- oder Doppelkupplung)
- 2, 2': Kupplungspakete
- 2A, 2B: Außen- bzw. Innenlamellen
- 2A', 2B': Außen- bzw. Innenlamellen
- 3, 3': Betätigungskolben
- 4, 4': Hydraulisch wirksamer Bereich
- 5, 5': Hydraulikdruckkammer
- 6, 6': Ausgleichskammer
- 7, 7': Federanordnung
- 8, 8': Trennwand
- 9: Nabe
- 10: Abtriebswelle
- 11: Antriebswelle
- 12: Begrenzungswand
- 13: Gehäuse
- 14, 14': Lamellenträger
- 15, 16: Lageranordnung
- 17, 17': Ölniveau
- 18, 18': Schlitz
- 19, 19': Verbindungswand
- 20, 20': Ringförmige Kammern
- 21, 21': Ringförmige Kammern
- 22, 22': Wände bzw. umlaufende Ringwände
- 23, 23': Wände bzw. umlaufende Ringwände
- 24, 24': Wände bzw. umlaufende Ringwände
- 25, 25': Dichtanordnung
- 26, 26': Dichtanordnung
- 27, 27': Dichtanordnung
- 28, 28': Wandabschnitt
- 29, 29': Dichtwandabschnitt
- 30, 30': Schraubenfeder
- 31, 31': Schraubenführung

## Patentansprüche

1. Hydraulisch betätigte Schaltkupplung (1)
- mit einem Kupplungspaket (2),
- mit einem Betätigungskolben (3), der zwischen einer Betätigungsstellung zur Schließung des Kupplungspaketes (2) und einer Offenstellung bewegbar ist, und der einen hydraulisch wirksamen Bereich (4) aufweist;
- mit einer Hydraulikdruckkammer (5) auf einer Seite des Betätigungskolbens (3); und
- mit einer Ausgleichskammer (6) auf der gegenüberliegenden Seite des Betätigungskolbens (3), in der eine Federanordnung (7) zur Vorspannung des Betätigungskolbens (3) in die Offenstellung angeordnet ist,
**dadurch gekennzeichnet, dass**
- der hydraulisch wirksame Bereich (4) zwei sich in entgegengesetzte Richtungen (A, B) öffnende ringförmige Kammern (20, 21) aufweist.

2. Schaltkupplung nach Anspruch 1, **dadurch gekennzeichnet, dass** die Kammern (20, 21) von in Radialrichtung (R) beabstandet zueinander angeordneten und miteinander verbundenen Wänden (20-24) begrenzt werden.

3. Schaltkupplung nach Anspruch 2, **dadurch gekennzeichnet, dass** sich eine (21) der Kammern (20, 21) in Richtung auf die Hydraulikdruckkammer (5) öffnet und einen Wandabschnitt (28) einer Begrenzungswand (12) der Hydraulikdruckkammer (5) aufnimmt, in dem eine Dichtungsanordnung (25) angeordnet ist, die mit einer, in Radialrichtung (R) gesehen, von der Kupplungsnabe (9) am weitesten entfernt angeordneten Wand (24) zusammenwirkt.

4. Schaltkupplung nach Anspruch 2 oder 3, **dadurch gekennzeichnet, dass** die der Kupplungsnabe (9) unmittelbar benachbart angeordnete Wand (22) mit einer in der Kupplungsnabe (9) angeordneten Dichtungsanordnung (26) zusammenwirkt .

5. Schaltkupplung nach einem der Ansprüche 2 bis 4, **dadurch gekennzeichnet, dass** eine Trennwand (8), zu der sich die der Kupplungsnabe (9) benachbarte Kammer (20) der ringförmigen Kammern (20, 21) öffnet, eine sich zum Wandabschnitt (28) hin erstreckende Dichtwandabschnitt (29) aufweist, in dem eine weitere mit der radial äußersten Wand (24) zusammenwirkende Dichtanordnung (27) angeordnet ist.

6. Schaltkupplung nach einem der Ansprüche 1 bis 5, **dadurch gekennzeichnet, dass** die Federanordnung (7) mindestens eine Schraubenfeder (30) aufweist, die in der sich zur Ausgleichskammer (6) öffnenden ringförmigen Kammer (20) angeordnet ist.

7. Schaltkupplung nach Anspruch 6, **dadurch gekennzeichnet, dass** die Schraubenfeder (30) von einem Zapfen (31) geführt ist, der an der Trennwand (8) angeordnet ist.

8. Schaltkupplung nach einem der Ansprüche 2 bis 7, **dadurch gekennzeichnet, dass** die Trennwand (8) aus Kunststoff besteht.

9. Schaltkupplung nach einem der Ansprüche 1 bis 8, **dadurch gekennzeichnet, dass** die Kupplung (1) als Doppelkupplung ausgebildet ist, die zwei axial nebeneinander angeordnete Betätigungskolben (3, 3') aufweist, von denen wenigstens einer einen hydraulisch wirksamen Bereich (4 oder 4') mit zwei sich in entgegengesetzter Richtung (A, B) öffnenden ringförmigen Kammern (20, 21 bzw. 20', 21') aufweist.

10. Schaltkupplung nach Anspruch 9, **dadurch gekennzeichnet, dass** beide Betätigungskolben (3, 3') ringförmige Kammern (20, 21 bzw. 20', 21') aufweisen.

11. Schaltkupplung nach einem der Ansprüche 3 bis 10, **dadurch gekennzeichnet, dass** die Dichtanordnungen (25, 26, 27 bzw. 25', 26', 27') als Standarddichtungen, insbesondere als O-Ringe und/oder Nut-Ringe ausgebildet sind.
